# EUROPEAN PATENT APPLICATION

(11) **EP 3 623 861 A1**
(43) Date of publication of application: **18.03.2020**
(21) Application number: 17861213.1
(22) Date of filing: 31.10.2017
(51) Int. Cl.: G02F 1/1335

(54) **DISPLAY SUBSTRATE, MANUFACTURING METHOD THEREFOR, REFLECTIVE LIQUID CRYSTAL DISPLAY PANEL, AND DISPLAY DEVICE**

(30) Priority: 12.05.2017 CN 201710333398
(71) Applicant: BOE Technology Group Co., Ltd., Beijing 100015 (CN); Hefei BOE Optoelectronics Technology Co., Ltd., Hefei, Anhui 230012 (CN)
(72) Inventor: SUN, Li, Beijing 100176 (CN); LI, Hongmin, Beijing 100176 (CN); SHAO, Wenjun, Beijing 100176 (CN)
(74) Representative: Cohausz & Florack
(86) International application number: PCT/CN2017/108512
(87) International publication number: WO 2018/205506

(57) **Abstract**

The present disclosure discloses a display substrate, a method for fabricating the same, a reflective liquid crystal display panel, and a display device, and the display substrate includes: an underlying substrate, a black matrix located on a side of the underlying substrate, and a reflecting layer and a common electrode layer located on a side of the black matrix away from the underlying substrate and electrically connected with each other, wherein a orthographic projection of the black matrix onto the underlying substrate overlies a orthographic projection of the reflecting layer onto the underlying substrate. The contrast and display performance of the reflective liquid crystal display panel can be improved.

## Description

This application claims priority to Chinese Patent Application No. 201710333398.4, filed with the Chinese Patent Office on May 12, 2017, and entitled "A display substrate, a method for fabricating the same, a reflective liquid crystal display panel, and a display device", the content of which is hereby incorporated by reference in its entirety.

### Field

The present disclosure relates to the field of display technologies, and particularly to a display substrate, a method for fabricating the same, a reflective liquid crystal display panel, and a display device.

### Background

With the development of the display industry, liquid crystal display panels are increasingly diversified in structure. The liquid crystal display panels available at present are generally transmittive liquid crystal display panels with backlight sources located behind array substrates, where an image is displayed by transmitting light, emitted by the backlight sources, through the array substrates. Since such a transmittive liquid crystal display panel is provided with the backlight source, both power consumption for displaying, and the volume and weight of the liquid crystal display panel may be increased, which contradicts the development trend of the liquid crystal display panel becoming lightweight, thin, and portable.

In an environment with a surrounding strong external light source, the reflective liquid crystal display panel can display an image using external light from the environment. The reflective liquid crystal display panel has advantages of a high contrast, low power consumption, a small thickness, a low weight, and other advantages over the transmittive liquid crystal display panel with the backlight source. Accordingly the reflective liquid crystal display panel has been increasingly applied to portable electronic terminals, e.g., a mobile phone, a notebook computer, a digital camera, a personal digital assistant, etc. However a general drawback of the existing reflective liquid crystal display panel lies in a low contrast, and in order to improve the contrast, a reflecting area needs to be increased so that incident light can be reflected into human eyes as much as possible to thereby improve the quality of the displayed image.

### Summary

An embodiment of the present disclosure provides a display substrate including: an underlying substrate, a black matrix located on a side of the underlying substrate, and a reflecting layer and a common electrode layer, located on a side of the black matrix away from the underlying substrate, and electrically connected with each other, wherein a orthographic projection of the black matrix onto the underlying substrate overlies a orthographic projection of the reflecting layer onto the underlying substrate.

In some embodiments of the present disclosure, in the display substrate above according to the embodiment of the present disclosure, the orthographic projection of the reflecting layer onto the underlying substrate completely overlaps with the orthographic projection of the black matrix onto the underlying substrate.

In some embodiments of the present disclosure, in the display substrate above according to the embodiment of the present disclosure, a surface of the reflecting layer on a side of the reflecting layer away from the black matrix is a roughened surface.

In some embodiments of the present disclosure, in the display substrate above according to the embodiment of the present disclosure, the reflecting layer is located between the black matrix and the common electrode layer.

In some embodiments of the present disclosure, in the display substrate above according to the embodiment of the present disclosure, the display substrate further includes a color resist layer located between the reflecting layer and the black matrix.

In some embodiments of the present disclosure, in the display substrate above according to the embodiment of the present disclosure, the display substrate further includes a color resist layer located on a side of the common electrode layer away from the underlying substrate.

In some embodiments of the present disclosure, in the display substrate above according to the embodiment of the present disclosure, the display substrate further includes a color resist layer located between the reflecting layer and the common electrode layer; and the common electrode layer is electrically connected with the reflecting layer through a first via hole running through the color resist layer.

In some embodiments of the present disclosure, in the display substrate above according to the embodiment of the present disclosure, the display substrate further includes a first insulating layer located between the reflecting layer and the common electrode layer; and the common electrode layer is electrically connected with the reflecting layer through a second via hole running through the first insulating layer.

In some embodiments of the present disclosure, in the display substrate above according to the embodiment of the present disclosure, the reflecting layer is located on the side of the common electrode layer away from the underlying substrate.

In some embodiments of the present disclosure, in the display substrate above according to the embodiment of the present disclosure, the display substrate further includes a color resist layer located between the common electrode layer and the black matrix.

In some embodiment of the present disclosure, in the display substrate above according to the embodiment of the present disclosure, the display substrate further includes a color resist layer located on a side of the reflecting layer away from the underlying substrate.

In some embodiments of the present disclosure, in the display substrate above according to the embodiment of the present disclosure, the display substrate further includes a color resist layer located between the common electrode layer and the reflecting layer; and the reflecting layer is electrically connected with the common electrode layer through a third via hole running through the color resist layer.

In some embodiments of the present disclosure, in the display substrate above according to the embodiment of the present disclosure, the display substrate further includes a second insulating layer located between the reflecting layer and the common electrode layer; and the reflecting layer is electrically connected with the common electrode layer through a fourth via hole running through the second insulating layer.

In some embodiments of the present disclosure, in the display substrate above according to the embodiment of the present disclosure, a material of the reflecting layer is a metal material.

In some embodiments of the present disclosure, in the display substrate above according to the embodiment of the present disclosure, the material of the reflecting layer is one or an alloy of molybdenum, aluminum, tungsten, titanium, and copper.

An embodiment of the present disclosure provides a reflective liquid crystal display panel including a display substrate and an opposite substrate arranged opposite to each other, wherein the display substrate is the display substrate above according to any one of the embodiments above; and the opposite substrate includes reflecting pixel electrodes.

An embodiment of the present disclosure provides a display device including the reflective liquid crystal display panel above according to the embodiment of the present disclosure.

An embodiment of the present disclosure provides a method for fabricating the display substrate above according to any one of the embodiments above, the method including: providing an underlying substrate; forming a black matrix on the underlying substrate; and forming a reflecting layer and a common electrode layer electrically connected with each other, on the underlying substrate formed with the black matrix, wherein a orthographic projection of the black matrix onto the underlying substrate overlies a orthographic projection of the reflecting layer onto the underlying substrate.

In some embodiments of the present disclosure, in the fabricating method above according to the embodiment of the present disclosure, patterns of the black matrix and the reflecting layer are fabricated respectively using the same mask.

In some embodiments of the present disclosure, in the fabricating method above according to the embodiment of the present disclosure, after the reflecting layer is formed on the black matrix, the method further includes: roughening a surface of the reflecting layer on a side of the reflecting layer away from the black matrix.

### Brief Description of the Drawings

Fig.1 is a schematic structural diagram of the reflective liquid crystal display panel in the related art;
Fig.2a is a first schematic structural diagram of a display substrate according to an embodiment of the present disclosure;
Fig.2b is a second schematic structural diagram of a display substrate according to the embodiment of the present disclosure;
Fig.2c is a third schematic structural diagram of a display substrate according to the embodiment of the present disclosure;
Fig.2d is a fourth schematic structural diagram of a display substrate according to the embodiment of the present disclosure;
Fig.3a is a fifth schematic structural diagram of a display substrate according to the embodiment of the present disclosure;
Fig.3b is a sixth schematic structural diagram of a display substrate according to the embodiment of the present disclosure;
Fig.3c is a seventh schematic structural diagram of a display substrate according to the embodiment of the present disclosure;
Fig.3d is an eighth schematic structural diagram of a display substrate according to the embodiment of the present disclosure;
Fig.4 is a flow chart of a method for fabricating a display substrate according to an embodiment of the present disclosure; and
Fig.5 is a schematic structural diagram of a reflective liquid crystal display panel according to an embodiment of the present disclosure.

### Detailed Description of the Embodiments

Particular implementations of a display substrate, a method for fabricating the same, a reflective liquid crystal display panel, and a display device according to embodiments of the present disclosure will be described below in details.

The shapes and sizes of respective layers in the drawings are not intended to reflect any real proportion in the display substrate or the reflective liquid crystal display panel, but only intended to illustrate the present disclosure.

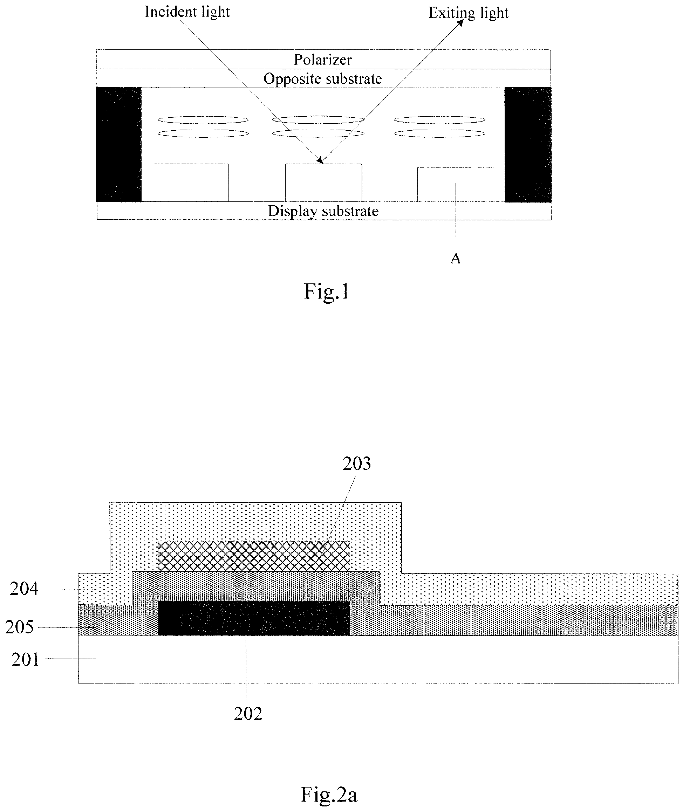

Fig.1 illustrates a schematic structural diagram of the reflective liquid crystal display panel in the related art. As can be apparent from Fig.1, the reflective liquid crystal display panel is provided with metal (e.g., aluminum) pixel electrodes A with a high reflectivity instead of indium tin oxide (ITO) pixel electrodes on an array substrate (i.e., an opposite substrate in Fig.1) to reflect ambient light incident into a liquid crystal box so as to display an image.

In order to increase a reflecting area, and to improve the contrast of the reflective liquid crystal display panel, a display substrate according to an embodiment of the present disclosure as illustrated in Fig.2a to Fig.3d includes: an underlying substrate 201, a black matrix 202 located on one side of the underlying substrate 201, and a reflecting layer 203 and a common electrode layer 204 located on a side of the black matrix 202 away from the underlying substrate 201 and electrically connected with each other, where a orthographic projection of the black matrix 202 onto the underlying substrate 201 overlies a orthographic projection of the reflecting layer 203 onto the underlying substrate 201.

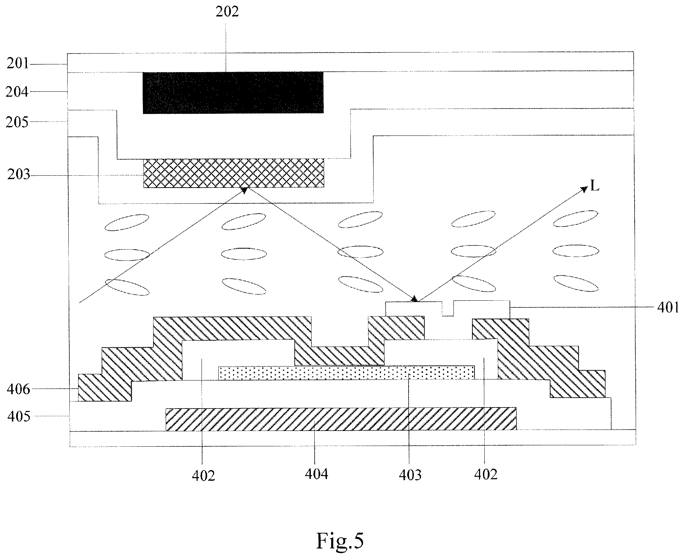

In the display substrate above according to the embodiment of the present disclosure, the orthographic projection of the black matrix 202 onto the underlying substrate 201 overlies the orthographic projection of the reflecting layer 203 onto the underlying substrate 201, so that ambient light from the outside may not be incident directly onto the surface of the reflecting layer 203 on the side thereof facing the black matrix 202, so the reflecting layer 203 may not affect the total amount of incident light entering the liquid crystal box. Furthermore the reflecting layer 203 is added above the black matrix 202, as illustrated in Fig.5, so that the incident light L entering the liquid crystal box can exit after being reflected repeatedly between pixel electrodes 401 of the opposite substrate and the reflecting layer 203 of the display substrate, to thereby avoid the black matrix 202 from absorbing the light reflected by the pixel electrodes 401 to the region of the black matrix 202, so as to increase the amount of exiting light, thus increasing the reflecting area to some extent, and as a result, improving the contrast of the reflective liquid crystal display panel. Furthermore the common electrode layer 204 and the reflecting layer 203 are arranged in parallel, so that the resistance of the common electrode layer 204 can be reduced to some extent to thereby improve the uniformity of a distributed common electrode signal so as to improve the display performance of the reflective liquid crystal display panel.

A mask which is a tool for transferring a minute pattern plays a significant transitional role in production of a display panel, and is an indispensable important stage in the display panel industry chain. However the expensive mask accounts for a significant proportion of the production cost thereof. Accordingly in order to lower the production cost, in the display substrate above according to the embodiment of the present disclosure, the orthographic projection of the reflecting layer 203 onto the underlying substrate 201 completely overlaps with the orthographic projection of the black matrix 202 onto the underlying substrate 201 as illustrated in Fig.2a to Fig.3d, so that patterns of the black matrix 202 and the reflecting layer 203 can be fabricated respectively using the same mask to thereby save the production cost. Furthermore the black matrix 202 is generally structured like a grid, so the reflecting layer 203 fabricated using the mask of the black matrix 202 is also structured like a grid. In this way, there may be a lower resistance of the reflecting layer, and when the common electrode layer is connected in parallel with the reflecting layer with the smaller resistance, the resistance of the common electrode layer can be further reduced.

Of course, in a particular implementation, alternatively a mask for fabricating the pattern of the reflecting layer 203 can be designed separately as needed in reality to fabricate the reflecting layer 203 in another structure, although the embodiment of the present disclosure will not be limited thereto.

In a particular implementation, in order to improve the amount of exiting light as much as possible, in the display substrate above according to the embodiment of the present disclosure, the surface of the reflecting layer on the side thereof away from the black matrix is a roughened surface, so that when the incident light entering the liquid crystal box is reflected to the roughened surface of the reflecting layer, the light can be diffusely reflected on the roughened surface of the reflecting layer to thereby minimize the amount of lost light so as to improve the amount of exiting light.

In a particular implementation, in the display substrate above according to the embodiment of the present disclosure, the surface of the reflecting layer on the side thereof away from the black matrix can be roughened in a number of implementations, although the embodiment of the invention will not be limited thereto. For example, the roughened surface of the reflecting layer can be obtained by controlling the film formation rate of the reflecting layer. In another example, after the pattern of the reflecting layer is formed, the surface of the reflecting layer on the side thereof away from the black matrix can be processed into a non-uniform, non-flatness, and unsmooth surface in a plasma process. Furthermore the surface of the reflecting layer on the side thereof away from the black matrix can be processed in the plasma process using gas including one or more of the following halogen elements: chlorine (Cl₂), bromine (Br₂), iodine (I₂), hydrogen chloride (HCl), hydrogen bromide (HBr), and hydrogen iodide (HI), although the embodiment of the present disclosure will not be limited thereto.

In a particular implementation, in the display substrate above according to the embodiment of the present disclosure, the reflecting layer can be embodied in a number of implementations, and for example, the material of the reflecting layer can be a metal material, e.g., a metal material with a high reflectivity, although the embodiment of the present disclosure will not be limited thereto. Furthermore in a particular implementation, the material of the reflecting layer can be one or an alloy of molybdenum, aluminum, tungsten, titanium and copper, although the embodiment of the present disclosure will not be limited thereto.

Generally in the reflective liquid crystal display panel, liquid crystal molecules are controlled by an electric field between the pixel electrodes on the opposite substrate and the common electrode of the display substrate to be deflected to thereby display an image. Particularly the common electrode layer can be connected with a common electrode line on the opposite substrate through a gold ball in a sealant to thereby receive a common electrode signal transmitted on the common electrode line. In a particular implementation, the material of the common electrode layer is a transparent electrically-conductive material, e.g., one or a combination of a tin indium oxide material, a zinc indium oxide material, a carbon nano-tube, or grapheme, although the embodiment of the present disclosure will not be limited thereto.

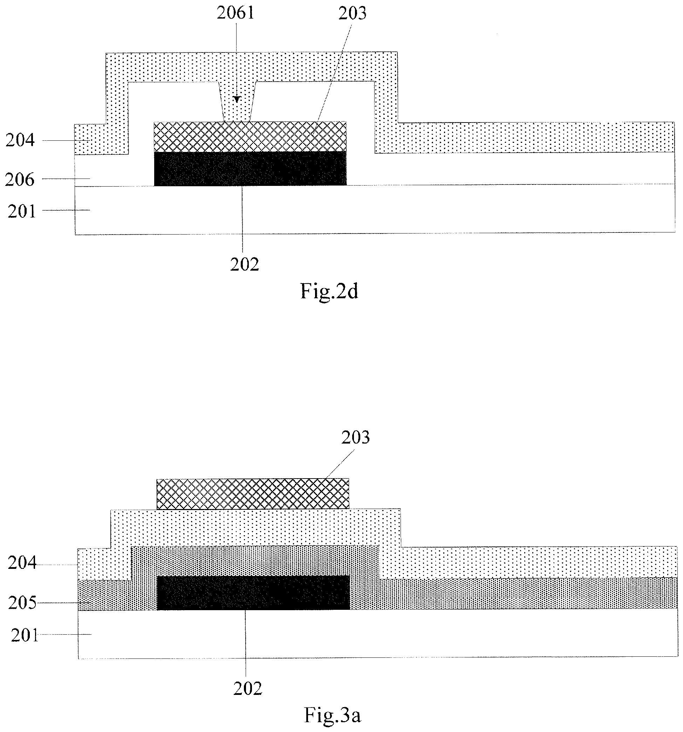

In a particular implementation, there may be the following two implementations of the relative positional relationship between the reflecting layer 203 and the common electrode layer 204: in a first implementation, the reflecting layer 203 can be located between the black matrix 202 and the common electrode layer 204 as illustrated in Fig.2a to Fig.2d; or in a second implementation, the reflecting layer 203 can alternatively be located on the side of the common electrode layer 204 away from the underlying substrate 201 as illustrated in Fig.3a to Fig.3d. Furthermore in the display substrate above according to the embodiment of the present disclosure, the reflecting layer 203 can be electrically connected directly with the common electrode layer 204, or the reflecting layer 203 and the common electrode layer 204 can be firstly insulated from each other and then electrically connected with each other through a via hole, although the embodiment of the present disclosure will not be limited thereto.

In a particular implementation, in order to obtain a color image, in the display substrate above according to the embodiment of the present disclosure, the array substrate can further include a color resist layer 205 as illustrated in Fig.2a to Fig.2c and Fig.3a to Fig.3c. Furthermore generally the color resist layer includes a red-light color resist, a green-light color resist, and a blue-light color resist. Of course, the color resist layer can further include color resists of other colors, although the embodiment of the present disclosure will not be limited thereto. Of course, in the display substrate above according to the embodiment of the present disclosure, the color resist layer can be further arranged on the opposite substrate. With this arrangement, on one hand, coupling between a signal line and the pixel electrodes on the opposite substrate can be alleviated to thereby improve a delay of a signal on the signal line. On the other hand, the color resist layer and the pixel electrodes can be further avoided from being not aligned strictly, to thereby improve an opening ratio of the reflective liquid crystal display panel so as to improve the display quality of the reflective liquid crystal display panel.

In a particular implementation, in the display substrate above according to the embodiment of the present disclosure, there may be a number of implementations of the relative positional relationship between the color resist layer, the reflecting layer and the common electrode layer, and several implementations thereof will be listed below.

Particularly in a first implementation, when the reflecting layer 203 is located between the black matrix 202 and the common electrode layer 204, in the display substrate above according to the embodiment of the present disclosure, as illustrated in Fig.2a, the reflecting layer 203 is electrically connected directly with the common electrode layer 204 without any other layer arranged therebetween, and the color resist layer 205 can be located between the reflecting layer 203 and the black matrix 202.

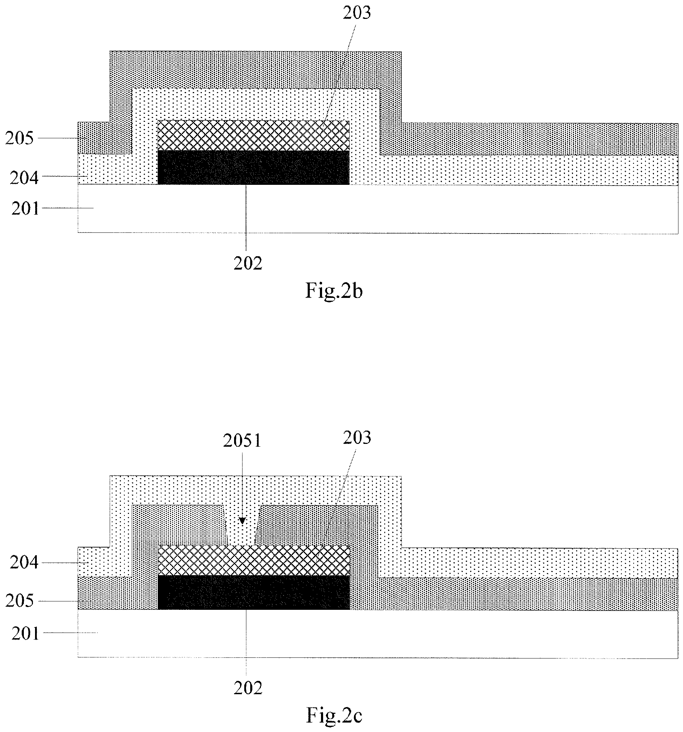

Particularly in a second implementation, when the reflecting layer 203 is located between the black matrix 202 and the common electrode layer 204, in the display substrate above according to the embodiment of the present disclosure, as illustrated in Fig.2b, the reflecting layer 203 is electrically connected directly with the common electrode layer 204 without any other layer arranged therebetween, and the color resist layer 205 can be located on the side of the common electrode layer 204 away from the underlying substrate 201. At this time, the color resist layer 205 is not arranged in the region of the sealant, so that the common electrode layer 204 is electrically connected with the common electrode line on the opposite substrate through the gold ball in the sealant.

Particularly in a third implementation, when the reflecting layer 203 is located between the black matrix 202 and the common electrode layer 204, a layer can be arranged between the reflecting layer 203 and the common electrode layer 204 to insulate them from each other, and the reflecting layer 203 can be further electrically connected with the common electrode layer 204 through a via hole. In the display substrate above according to the embodiment of the present disclosure, as illustrated in Fig.2d, the array substrate can further include a first insulating layer 206 located between the reflecting layer 203 and the common electrode layer 204; and the common electrode layer 204 is electrically connected with the reflecting layer 203 through a second via hole 2061 running through the first insulation layer 206, where the first insulating layer 206 can be an insulating layer structured in one or more layers to insulate them from each other, although the embodiment of the present disclosure will not be limited thereto.

Particularly in a fourth implementation, the material of the color resist layer 205 is generally insulating, and in a particular implementation, the color resist layer 205 can be used as an insulating layer between the reflecting layer 203 and the common electrode layer 204, and the reflecting layer 203 can be further electrically connected with the common electrode layer 204 through a via hole. In the display substrate above according to the embodiment of the present disclosure, as illustrated in Fig.2c, when the reflecting layer 203 is located between the black matrix 202 and the common electrode layer 204, the color resist layer 205 can be located between the reflecting layer 203 and the common electrode layer 204, and the common electrode layer 204 can be electrically connected with the reflecting layer 203 through a first via hole 2051 running through the color resist layer 205, so that the color resist layer 205 can be used as the insulating layer between the reflecting layer 203 and the common electrode layer 204 to thereby avoid a new layer from being added, so as to facilitate a design of the reflective liquid crystal display panel which is lightweight and thinned.

Particularly in a fifth implementation, when the reflecting layer 203 is located on the side of the common electrode layer 204 away from the underlying substrate 201, in the display substrate above according to the embodiment of the present disclosure, as illustrated in Fig.3a, the reflecting layer 203 is electrically connected directly with the common electrode layer 204 without any other layer arranged therebetween, and the color resist layer 205 can be located between the common electrode layer 204 and the black matrix 202.

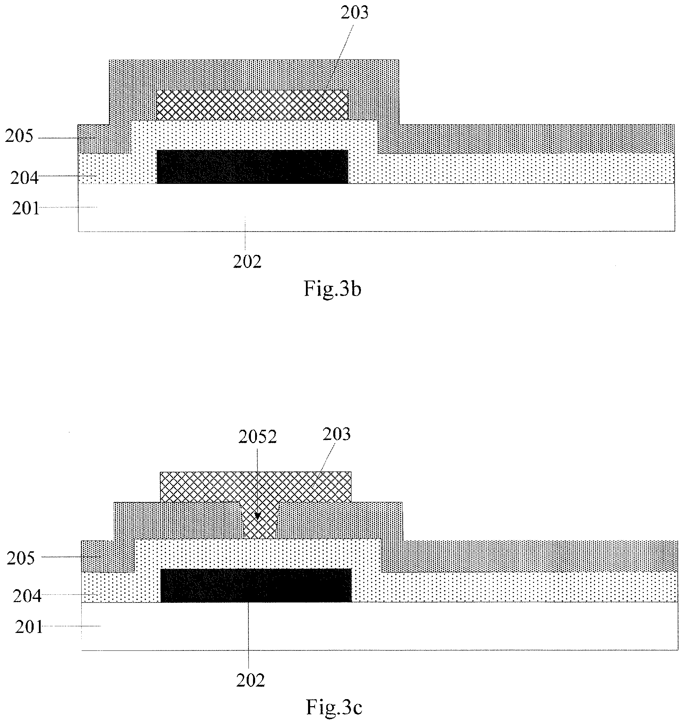

Particularly in a sixth implementation, when the reflecting layer 203 is located on the side of the common electrode layer 204 away from the underlying substrate 201, in the display substrate above according to the embodiment of the present disclosure, as illustrated in Fig.3b, the reflecting layer 203 is electrically connected directly with the common electrode layer 204 without any other layer arranged therebetween, and the color resist layer 205 can be located on the side of the reflecting layer 203 away from the underlying substrate 201. At this time, the color resist layer 205 is not arranged in the region of the sealant, so that the common electrode layer 204 is electrically connected with the common electrode line on the opposite substrate through the gold ball in the sealant.

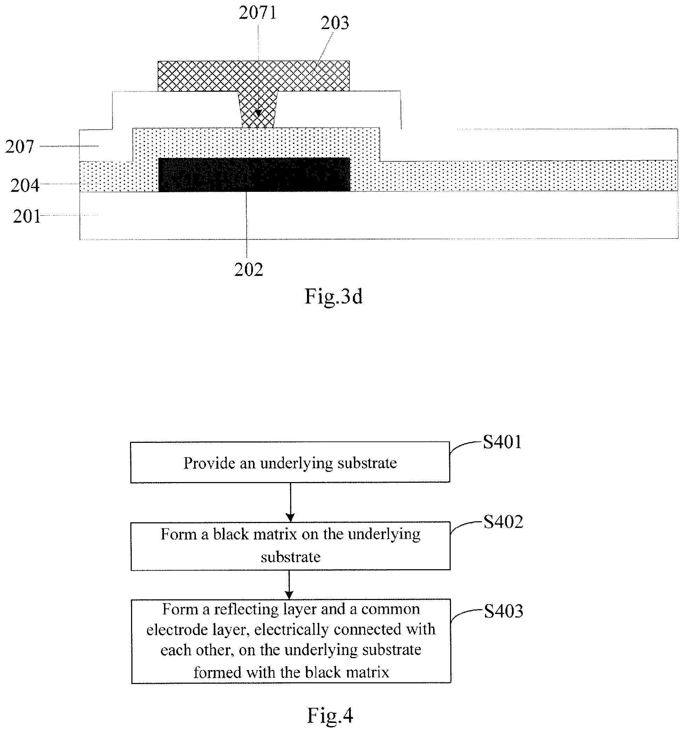

Particularly in a seventh implementation, when the reflecting layer 203 is located on the side of the common electrode layer 204 away from the underlying substrate 201, a layer can be arranged between the reflecting layer 203 and the common electrode layer 204 to insulate them from each other, and the reflecting layer 203 can be further electrically connected with the common electrode layer 204 through a via hole. In the display substrate above according to the embodiment of the present disclosure, as illustrated in Fig.3d, the array substrate can further include a second insulating layer 207 located between the reflecting layer 203 and the common electrode layer 204; and the reflecting layer 203 is electrically connected with the common electrode layer 204 through a fourth via hole 2071 running through the second insulation layer 207, where the second insulating layer 207 can be an insulating layer structured in one or more layers to insulate them from each other, although the embodiment of the present disclosure will not be limited thereto. At this time, the second insulating layer 207 is not arranged in the region of the sealant, so that the common electrode layer 204 is electrically connected with the common electrode line on the opposite substrate through the gold ball in the sealant.

Particularly in an eighth implementation, the material of the color resist layer 205 is generally insulating, and in a particular implementation, the color resist layer 205 can be used as an insulating layer between the reflecting layer 203 and the common electrode layer 204, and the reflecting layer 203 can be further electrically connected with the common electrode layer 204 through a via hole. In the display substrate above according to the embodiment of the present disclosure, as illustrated in Fig.3c, when the reflecting layer 203 is located on the side of the common electrode layer 204 away from the underlying substrate 201, the color resist layer 205 can be located between the common electrode layer 204 and the reflecting layer 203, and the reflecting layer 203 can be electrically connected with the common electrode layer 204 through a third via hole 2052 running through the color resist layer 205, so that the color resist layer 205 can be used as the insulating layer between the reflecting layer 203 and the common electrode layer 204 to thereby avoid a new layer from being added, so as to facilitate a design of the reflective liquid crystal display panel which is lightweight and thinned. At this time, the color resist layer 205 is not arranged in the region of the sealant, so that the common electrode layer 204 is electrically connected with the common electrode line on the opposite substrate through the gold ball in the sealant.

Based upon the same idea of the present disclosure, an embodiment of the present disclosure provides a method for fabricating the display substrate above, and since the fabricating method addresses the problem under a similar principle to the display substrate above, reference can be made to the implementation of the display substrate above according to the embodiment of the present disclosure for an implementation of the fabricating method according to this embodiment of the present disclosure, and a repeated description thereof will be omitted here.

As illustrated in Fig.4, a method for fabricating the display substrate above according to an embodiment of the present disclosure can particularly include the following steps.

S401 is to provide an underlying substrate.

S402 is to form a black matrix on the underlying substrate.

S403 is to form a reflecting layer and a common electrode layer, electrically connected with each other, on the underlying substrate formed with the black matrix.

A orthographic projection of the black matrix onto the underlying substrate overlies a orthographic projection of the reflecting layer onto the underlying substrate.

In a particular implementation, in order to lower a production cost, in the fabricating method above according to the embodiment of the present disclosure, patterns of the black matrix and the reflecting layer are fabricated respectively using the same mask.

In a particular implementation, in order to improve the amount of exiting light as much as possible, in the fabricating method above according to the embodiment of the present disclosure, after the reflecting layer is formed on the black matrix in the step S403, the method can further include roughening the surface of the reflecting layer on the side thereof away from the black matrix.

It shall be noted that in the fabricating method above according to the embodiment of the present disclosure, the respective layers are structurally formed in pattering processes which can include a part or all of processes of deposition, coating photoresist, masking using a mask, exposure, development, etching, and stripping photoresist, but also can include other processes, dependent upon the patterns thereof to be formed in their real fabrication processes, although the embodiment of the present disclosure will not be limited thereto. For example, a post-baking process can be further included after development and before etching.

Here the deposition process can be chemical vapor deposition, plasma enhanced chemical vapor deposition, or physical vapor deposition, although the embodiment of the present disclosure will not be limited thereto; the mask for the masking process can be a half tone mask, a single slit mask, or a gray tone mask, although the embodiment of the present disclosure will not be limited thereto; and the etching process can be dry etching or wet etching, although the embodiment of the present disclosure will not be limited thereto.

In a particular implementation, in the fabricating method above according to the embodiment of the present disclosure, forming the reflecting layer and the common electrode layer, electrically connected with each other, on the underlying substrate formed with the black matrix can particularly include the following steps.

Forming the reflecting layer on the underlying substrate formed with the black matrix.

Forming the common electrode layer electrically connected with the reflecting layer, on the underlying substrate formed with the reflecting layer.

Of course, forming the reflecting layer and the common electrode layer, electrically connected with each other, on the underlying substrate formed with the black matrix alternatively can particularly include the following steps.

Forming the common electrode layer on the underlying substrate formed with the black matrix.

Forming the reflecting layer electrically connected with the common electrode layer, on the underlying substrate formed with the common electrode layer.

In order to obtain a color image, generally a color resist layer is further formed. In a particular implementation, there may be a number of implementations of a relative order relationship between the color resist layer, the reflecting layer, and the common electrode layer, and several implementations thereof will be listed below.

Particularly in a first implementation, when firstly the reflecting layer and then the common electrode layer are formed, in the fabricating method above according to the embodiment of the present disclosure, after the black matrix is formed, and before the reflecting layer is formed, the method can further include forming the color resist layer on the underlying substrate formed with the black matrix, so that the black matrix 202, the color resist layer 205, the reflecting layer 203, and the common electrode layer 204 can be formed on the underlying substrate in that order, thus resulting in the structure of the display substrate as illustrated in Fig.2a.

In order to better understand the fabricating method above according to the embodiment of the present disclosure, a process of fabricating the display substrate as illustrated in Fig.2a according to an embodiment of the present disclosure particularly includes the following steps.
(1) Providing an underlying substrate 201.
(2) Forming a black matrix 202 structured like a grid on the underlying substrate 201.
(3) Forming a color resist layer 205 including a red-light color resist, a green-light color resist, and a blue-light color resist on the underlying substrate 201 with the black matrix 202 structured like a grid.
(4) Forming a reflecting layer 203 structured like a grid on the underlying substrate 201 formed with the color resist layer 205 using a mask for forming a pattern of the black matrix 202; and providing the reflecting layer 203 with a rough surface on the side thereof away from the black matrix 202 by controlling a film formation rate of the reflecting layer 203.
(5) Forming a common electrode layer 204 on the underlying substrate 201 formed with the reflecting layer 203.

Particularly in a second implementation, when firstly the reflecting layer and then the common electrode layer are formed, in the fabricating method above according to the embodiment of the present disclosure, after the common electrode layer is formed, the method can further include forming the color resist layer on the underlying substrate formed with the common electrode layer, so that the black matrix 202, the reflecting layer 203, the common electrode layer 204, and the color resist 205 can be formed on the underlying substrate in that order, thus resulting in the structure of the display substrate as illustrated in Fig.2b.

In order to better understand the fabricating method above according to the embodiment of the present disclosure, in a process of fabricating the display substrate as illustrated in Fig.2b according to an embodiment of the present disclosure particularly, the steps (1) and (2) in this embodiment are substantially the same as the steps (1) and (2) of fabricating the display substrate as illustrated in Fig.2a, so a repeated description thereof will be omitted here. The remaining process in this embodiment particularly includes the following steps.
(3) Forming a reflecting layer 203 structured like a grid on the underlying substrate 201 formed with the black matrix 202 using a mask for forming a pattern of the black matrix 202; and providing the reflecting layer 203 with a rough surface on the side thereof away from the black matrix 202 by controlling a film formation rate of the reflecting layer 203.
(4) Forming a common electrode layer 204 on the underlying substrate 201 formed with the reflecting layer 203.
(5) Forming a color resist layer 205 including a red-light color resist, a green-light color resist, and a blue-light color resist on the underlying substrate 201 with the common electrode layer 204.

Particularly in a third implementation, when firstly the reflecting layer and then the common electrode layer are formed, in the fabricating method above according to the embodiment of the present disclosure, after the black matrix is formed, and before the common electrode layer is formed, the method can further include forming a first insulating layer on the underlying substrate formed with the reflecting layer, and a second via hole running through the first insulating layer.

Forming the common electrode layer electrically connected with the reflecting layer can particularly include forming the common electrode layer on the underlying substrate formed with the first insulating layer, where the formed common electrode layer is electrically connected with the reflecting layer through the second via hole, so that the black matrix 202, the reflecting layer 203, the first insulating layer 206, and the common electrode layer 204 can be formed on the underlying substrate in that order, thus resulting in the structure of the display substrate as illustrated in Fig.2d.

In order to better understand the fabricating method above according to the embodiment of the present disclosure, in a process of fabricating the display substrate as illustrated in Fig.2d according to an embodiment of the present disclosure particularly, the steps (1) to (3) in this embodiment are substantially the same as the steps (1) to (3) of fabricating the display substrate as illustrated in Fig.2b, so a repeated description thereof will be omitted here. The remaining process in this embodiment particularly includes the following steps.
(4) Forming the first insulating layer 206 on the underlying substrate 201 formed with the reflecting layer 203, and the second via hole 2061 running through the first insulating layer 206.
(5) Forming the common electrode layer 204 on the underlying substrate 201 formed with the insulating layer 206, where the formed common electrode layer 204 is electrically connected with the reflecting layer 203 through the second via hole 2061.

Particularly in a fourth implementation, when firstly the reflecting layer and then the common electrode layer are formed, in the fabricating method above according to the embodiment of the present disclosure, after the reflecting layer is formed, and before the common electrode layer is formed, the method can further include: forming the color resist layer on the underlying substrate formed with the reflecting layer, and a first via hole running through the color resist layer.

Forming the common electrode layer electrically connected with the reflecting layer can particularly include: forming the common electrode layer on the underlying substrate formed with the color resist layer, where the formed common electrode layer is electrically connected with the reflecting layer through the first via hole, so that the black matrix 202, the reflecting layer 203, the color resist layer 204, and the common electrode layer 204 can be formed on the underlying substrate in that order, thus resulting in the structure of the display substrate as illustrated in Fig.2c, and in this way, the color resist layer 204 can be used as the insulating layer between the reflecting layer 203 and the common electrode layer 204 to thereby avoid a new layer from being added, so as to facilitate a design of the reflective liquid crystal display panel which is lightweight and thinned.

Reference can be made to the process above of fabricating the display substrate as illustrated in Fig.2d for a process of fabricating the display substrate as illustrated in Fig.2c, where only the process in the step (4) is replaced with forming the color resist layer 205 including the red-light color resist, the green-light color resist, and the blue-light color resist on the underlying substrate 201 formed with the reflecting layer 203, and the first via hole 2051 running through the color resist layer 205. The remaining fabrication process is substantially the same as the process of fabricating the display substrate as illustrated in Fig.2d, so a repeated description thereof will be omitted here.

Particularly in a fifth implementation, when firstly the common electrode layer and then the reflecting layer are formed, in the fabricating method above according to the embodiment of the present disclosure, after the black matrix is formed, and before the common electrode layer is formed, the method can further include forming the color resist layer on the underlying substrate formed with the black matrix, so that the black matrix 202, the color resist layer 205, the common electrode layer 204, and the reflecting layer 203 can be formed on the underlying substrate in that order, thus resulting in the structure of the display substrate as illustrated in Fig.3a.

Reference can be made to the process above of fabricating the display substrate as illustrated in Fig.2a for a process of fabricating the display substrate as illustrated in Fig.3a, where only the step (4) and the step (5) are reversed in order, so a repeated description thereof will be omitted here.

Particularly in a sixth implementation, when firstly the common electrode layer and then the reflecting layer are formed, in the fabricating method above according to the embodiment of the present disclosure, after the reflecting layer is formed, the method can further include forming the color resist layer on the underlying substrate formed with the reflecting layer, so that the black matrix 202, the common electrode layer 204, the reflecting layer 203, and the color resist layer 205 can be formed on the underlying substrate in that order, thus resulting in the structure of the display substrate as illustrated in Fig.3b.

Reference can be made to the process above of fabricating the display substrate as illustrated in Fig.2b for a process of fabricating the display substrate as illustrated in Fig.3b, where only the step (3) and the step (4) are reversed in order, so a repeated description thereof will be omitted here.

Particularly in a seventh implementation, when firstly the common electrode layer and then the reflecting layer are formed, in the fabricating method above according to the embodiment of the present disclosure, after the common electrode layer is formed, and before the reflecting layer is formed, the method can further include forming the second insulating layer on the underlying substrate formed with the common electrode layer, and a fourth via hole running through the second insulating layer.

Forming the reflecting layer electrically connected with the common electrode layer can particularly include forming the reflecting layer on the underlying substrate formed with the second insulating layer, where the formed reflecting layer is electrically connected with the common electrode layer through the fourth via hole, so that the black matrix 202, the common electrode layer 204, the second insulating layer 207, and the reflecting layer 203 can be formed on the underlying substrate in that order, thus resulting in the structure of the display substrate as illustrated in Fig.3d.

Reference can be made to the process above of fabricating the display substrate as illustrated in Fig.2d for a process of fabricating the display substrate as illustrated in Fig.3d, where only the step (3) and the step (5) are reversed in order, so a repeated description thereof will be omitted here.

Particularly in an eighth implementation, when firstly the common electrode layer and then the reflecting layer are formed, in the fabricating method above according to the embodiment of the present disclosure, after the common electrode layer is formed, and before the reflecting layer is formed, the method can further include forming the color resist layer on the underlying substrate formed with the common electrode layer, and a third via hole running through the color resist layer.

Forming the reflecting layer electrically connected with the common electrode layer can particularly include forming the reflecting layer on the underlying substrate formed with the color resist layer, where the formed reflecting layer is electrically connected with the common electrode layer through the third via hole, so that the black matrix 202, the common electrode layer 204, the color resist layer 204, and the reflecting layer 203 can be formed on the underlying substrate in that order, thus resulting in the structure of the display substrate as illustrated in Fig.3c, and in this way, the color resist layer 204 can be used as the insulating layer between the reflecting layer 203 and the common electrode layer 204 to thereby avoid a new layer from being added, so as to facilitate a design of the reflective liquid crystal display panel which is lightweight and thinned.

Reference can be made to the process above of fabricating the display substrate as illustrated in Fig.3d for a process of fabricating the display substrate as illustrated in Fig.3c, where only the process in the step (4) is replaced with forming the color resist layer 205 including the red-light color resist, the green-light color resist, and the blue-light color resist on the underlying substrate 201 formed with the common electrode layer 204, and the third via hole 2052 running through the color resist layer 205. The remaining fabrication process is substantially the same as the process of fabricating the display substrate as illustrated in Fig.3d, so a repeated description thereof will be omitted here.

Based upon the same inventive idea, an embodiment of the present disclosure provides a reflective liquid crystal display panel, and since the reflective liquid crystal display panel addresses the problem under a similar principle to the display substrate above, reference can be made to the implementation of the display substrate above according to the embodiment of the present disclosure for an implementation of the reflective liquid crystal display panel according to the embodiment of the present disclosure, and a repeated description thereof will be omitted here.

Particularly an embodiment of the present disclosure provides a reflective liquid crystal display panel as illustrated in Fig.5, which includes a display substrate and an opposite substrate arranged opposite to each other.

The display substrate is the display substrate above.

The opposite substrate includes reflecting pixel electrodes 401.

Particularly in the reflective liquid crystal display panel above according to the embodiment of the present disclosure, the opposite substrate is an array substrate, a material of the pixel electrodes 401 is a metal material, and preferably a material of the pixel electrodes 401 is an aluminum metal material with a high reflectivity to reflect ambient incident light out from a liquid crystal box as much as possible.

Generally in the reflective liquid crystal display panel above according to the embodiment of the present disclosure, the opposite substrate further includes thin film transistors. Particularly the thin film transistors can particularly be structured with a bottom gate, or can be structured with a top gate, although the embodiment of the present disclosure will not be limited thereto.

Particularly in the reflective liquid crystal display panel above according to the embodiment of the present disclosure, when the thin film transistors are structured with a bottom gate, as illustrated in Fig.5, in each thin film transistor, both a source/drain 402 and a data line (not illustrated) are located above an active layer 403, both a gate 404 and a gate line (not illustrated) are located below the active layer 403, there is a gate insulation layer 405 arranged between the gate 404 and the active layer 403, and there is a passivation layer 406 arranged above the layer of the source/drain 402.

Here materials of the source/drain 402, the gate 404, the data line, and the gate line can be one or an alloy of molybdenum, aluminum, tungsten, titanium, and copper, although the embodiment of the present disclosure will not be limited thereto. Materials of the gate insulation layer 405 and the passivation layer 406 can be one or a combination of silicon oxide and silicon nitride, although the embodiment of the present disclosure will not be limited thereto. A material of the active layer 403 can be a poly-silicon semiconductor material, an amorphous silicon semiconductor material, an oxide semiconductor material, or an organic semiconductor material, although the embodiment of the present disclosure will not be limited thereto.

It shall be noted that in order to simplify the fabrication process, to save the fabrication cost, and improve the production efficiency, in the reflective liquid crystal display panel above according to the embodiment of the present disclosure, patterns of the gate 404 and the gate line, and preferably also a pattern of the common electrode line can be fabricated in the same patterning process. Of course, alternately two patterning processes can be performed, where the patterns of the gate line 404 and the gate line are fabricated in one of the patterning processes, and the pattern of the common electrode line is fabricated in the other patterning process, although the embodiment of the present disclosure will not be limited thereto. Furthermore the material of the common electrode line can be one or an alloy of molybdenum, aluminum, tungsten, titanium, and copper, although the embodiment of the present disclosure will not be limited thereto.

Furthermore in order to simplify the fabrication process, to save the fabrication cost, and improve the production efficiency, in the reflective liquid crystal display panel above according to the embodiment of the present disclosure, the source/drain 402 and the data line can also be fabricated in the same patterning process. Of course, patterns of the source/drain 402 and the data line can alternatively be performed respectively in two patterning processes, although the embodiment of the present disclosure will not be limited thereto.

It shall be noted that the reflective liquid crystal display panel above according to the embodiment of the present disclosure is applicable to liquid crystal display panels operating in a number of display modes, e.g., a liquid crystal display panel operating in a Twisted Nematic (TN) mode, a liquid crystal display panel operating in an Advanced Dimension Switch (ADS) mode, a liquid crystal display panel in a High-Advanced Dimension Switch (HADS), or a liquid crystal display panel in an In-Plane Switch (IPS) mode, although the embodiment of the present disclosure will not be limited thereto.

Based upon the same inventive idea, an embodiment of the present disclosure further provides a display device including the reflective liquid crystal display panel above according to the embodiment of the present disclosure, and the display device can be a mobile phone, a tablet computer, a TV set, a monitor, a notebook computer, a digital camera, a navigator, an intelligent watch, a wrist band, a personal digital assistant, or any other product or component with a display function. Reference can be made to the embodiment of the reflective liquid crystal display panel above for an implementation of the display device, and a repeated description thereof will be omitted here.

In the display substrate, the method for fabricating the same, the reflective liquid crystal display panel, and the display device according to the embodiments of the present disclosure, the display substrate includes: an underlying substrate, a black matrix structured like a grid and located on the underlying substrate, and a reflecting layer and a common electrode layer located above the black matrix and electrically connected with each other, where a orthographic projection of the black matrix onto the underlying substrate overlies a orthographic projection of the reflecting layer onto the underlying substrate. The orthographic projection of the black matrix onto the underlying substrate overlies the orthographic projection of the reflecting layer onto the underlying substrate, so that ambient light from the outside may not be incident directly on the surface of the reflecting layer on the side thereof facing the black matrix, so the reflecting layer may not affect the total amount of incident light entering the liquid crystal box. Furthermore the reflecting layer is added above the black matrix, so that the incident light entering the liquid crystal box can exit after being reflected repeatedly between pixel electrodes of the opposite substrate and the reflecting layer of the display substrate, to thereby avoid the black matrix from absorbing the light reflected by the pixel electrodes to the region of the black matrix, so as to increase the amount of exiting light, thus increasing the reflecting area to some extent, and as a result, improving the contrast of the reflective liquid crystal display panel. Furthermore the common electrode layer and the reflecting layer are arranged in parallel, so that the resistance of the common electrode layer can be reduced to some extent to thereby improve the uniformity of a distributed common electrode signal so as to improve the display performance of the reflective liquid crystal display panel.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A display substrate, comprising:
an underlying substrate,
a black matrix located on a side of the underlying substrate, and
a reflecting layer and a common electrode layer, located on a side of the black matrix away from the underlying substrate, and electrically connected with each other,
wherein a orthographic projection of the black matrix onto the underlying substrate overlies a orthographic projection of the reflecting layer onto the underlying substrate.

2. The display substrate according to claim 1, wherein the orthographic projection of the reflecting layer onto the underlying substrate completely overlaps with the orthographic projection of the black matrix onto the underlying substrate.

3. The display substrate according to claim 1, wherein a surface of the reflecting layer on a side of the reflecting layer away from the black matrix is a roughened surface.

4. The display substrate according to claim 1, wherein the reflecting layer is located between the black matrix and the common electrode layer.

5. The display substrate according to claim 4, wherein the display substrate further comprises a color resist layer located between the reflecting layer and the black matrix.

6. The display substrate according to claim 4, wherein the display substrate further comprises a color resist layer located on a side of the common electrode layer away from the underlying substrate.

7. The display substrate according to claim 4, wherein the display substrate further comprises a color resist layer located between the reflecting layer and the common electrode layer; and
the common electrode layer is electrically connected with the reflecting layer through a first via hole running through the color resist layer.

8. The display substrate according to claim 4, wherein the display substrate further comprises a first insulating layer located between the reflecting layer and the common electrode layer; and
the common electrode layer is electrically connected with the reflecting layer through a second via hole running through the first insulating layer.

9. The display substrate according to claim 1, wherein the reflecting layer is located on a side of the common electrode layer away from the underlying substrate.

10. The display substrate according to claim 9, wherein the display substrate further comprises a color resist layer located between the common electrode layer and the black matrix.

11. The display substrate according to claim 9, wherein the display substrate further comprises a color resist layer located on a side of the reflecting layer away from the underlying substrate.

12. The display substrate according to claim 9, wherein the display substrate further comprises a color resist layer located between the common electrode layer and the reflecting layer; and
the reflecting layer is electrically connected with the common electrode layer through a third via hole running through the color resist layer.

13. The display substrate according to claim 9, wherein the display substrate further comprises a second insulating layer located between the reflecting layer and the common electrode layer; and
the reflecting layer is electrically connected with the common electrode layer through a fourth via hole running through the second insulating layer.

14. The display substrate according to any one of claims 1 to 9, wherein a material of the reflecting layer is a metal material.

15. The display substrate according to claim 14, wherein the material of the reflecting layer is one or an alloy of molybdenum, aluminum, tungsten, titanium, and copper.

16. A reflective liquid crystal display panel, comprising a display substrate and an opposite substrate arranged opposite to each other, wherein:
the display substrate is the display substrate according to any one of claims 1 to 15; and
the opposite substrate comprises reflecting pixel electrodes.

17. A display device, comprising the reflective liquid crystal display panel according to claim 16.

18. A method for fabricating the display substrate according to any one of claims 1 to 15, the method comprising:
providing an underlying substrate;
forming a black matrix on the underlying substrate; and
forming a reflecting layer and a common electrode layer electrically connected with each other, on the underlying substrate formed with the black matrix,
wherein a orthographic projection of the black matrix onto the underlying substrate overlies a orthographic projection of the reflecting layer onto the underlying substrate.

19. The fabricating method according to claim 18, wherein patterns of the black matrix and the reflecting layer are fabricated respectively using the same mask.

20. The fabricating method according to claim 18 or 19, wherein after the reflecting layer is formed on the black matrix, the method further comprises:
roughening a surface of the reflecting layer on a side of the reflecting layer away from the black matrix.
